# EUROPÄISCHE PATENTSCHRIFT

(11) **EP 2 051 917 B1**
(45) Veröffentlichungstag und Bekanntmachung des Hinweises auf die Patenterteilung: **18.04.2012**
(21) Anmeldenummer: 08801457.6
(22) Anmeldetag: 09.06.2008
(51) Int. Cl.: B65G 39/12

(54) **ÜBER LAGERTÖPFE GELAGERTE FÖRDERROLLE**
CONVEYOR ROLLER MOUNTED VIA BEARING POTS
CYLINDRE DE TRANSPORT MONTE AU-DESSUS DES POTS DE DEPOT

(30) Priorität: 18.06.2007 DE 102007027932
(43) Veröffentlichungstag der Anmeldung: 29.04.2009
(73) Patentinhaber: Interroll Holding AG, 6592 Sant 'Antonino (CH)
(72) Erfinder: LINDEMANN, Harry, 42929 Wermelskirchen (DE)
(74) Vertreter: Müller-Boré & Partner Patentanwälte
(86) Internationale Anmeldenummer: PCT/EP2008/004590
(87) Internationale Veröffentlichungsnummer: WO 2008/155041

(56) Entgegenhaltungen:
- DE-A1- 2 846 103
- DE-A1- 10 343 541
- DE-A1- 19 900 134
- DE-B3-102006 038 185
- DE-B4- 10 217 221
- DE-C2- 3 622 312
- DE-T2- 69 515 319
- DE-U1- 8 613 942
- US-B1- 6 422 382

## Beschreibung

### Gebiet der Erfindung

Die Erfindung bezieht sich auf eine Förderanlage.

### Hintergrund der Erfindung und Stand der Technik

Streckenförderer, wie z.B. Förderbänder, weisen in der Regel mehrere Transportrollen auf, die in einem Rahmen des Streckenförderers drehbar gelagert sind. Zum Teil weisen diese Transportrollen ein im Inneren der Rolle angeordnetes Wälzlager auf, über welches die Transportrolle drehbar gelagert wird. Bei anderen Konstruktionsformen ist ein Wälzlager am Rahmen des Streckenförderers angeordnet und die Transportrollen weisen nur einen Achsstummel auf, der in dem Wälzlager gelagert ist.

Derartige Rollen sind Massenartikel, so dass bereits eine geringfügige Verbesserung bei der Herstellung der Transportrollen zu erheblichen Einspareffekten führen kann.

Bei direkt oder indirekt (z.B. über einen Fördergurt) angetriebenen Transportrollen stellt zudem der Spalt zwischen stillstehendem Rahmen und sich drehender Transportrolle eine Gefahrenstelle dar.

Eine Möglichkeit der Lagerung einer Transportrolle, die auch zu einer Entschärfung der Gefahrenstelle beiträgt ist z.B. in der deutschen Patentschrift DE 33 08 262 C1 offenbart. In dieser Druckschrift wird eine Transportrolle offenbart, bei der der Trommelmantel axial über eine Achse hinaus vorsteht. Dabei ist die Transportrolle in einem Lagerprofil über ein blockartiges Lagerelement gelagert, welches in den vorstehenden Trommelmantel hineinragt. Dabei wird der Spalt zwischen feststehendem und sich drehendem Teil durch den vorstehenden Trommelmantel abgedeckt. Bei der dargestellten Transportrolle ist die Achse in ein kreisrundes Blechteil mit einem mittigen Loch eingeschweißt, und das Blechteil wiederum ist in dem Trommelmantel eingeschweißt.

Die Herstellung einer solchen Transportrolle ist verhältnismäßig aufwändig und teuer.

Die DE 199 00 134 A1 offenbart eine Förderanlage mit einem Rahmen einem Paar von auf dem Rahmen montierten Wellen und einem über die Wellen geführten Förderband. Die Wellen weisen einen mit dem Band in Eingriff stehenden Abschnitt auf. Das Förderband ist breiter als die Länge des mit dem Band in Eingriff stehenden Abschnitts. Der Rahmen weist Wände mit äußeren Oberflächen auf die in einem Abstand beabstandet sind, der im wesentlichen gleich oder geringfügig kleiner ist als der Durchmesser des mit dem Band in Eingriff stehenden Abschnitts der Welle. Eine Endwand weist einen Radius auf, der im wesentlichen gleich oder geringfügig kleiner ist als der Radius des mit dem Band in Eingriff stehenden Abschnitts der Welle. Die äußeren Oberflächen sind ausgestaltet, um den äußeren Teil des Bandes zu schützen.

Die DE 695 15 319 T2 beschreibt eine ballige Förderrolle für ein Förderband, welche eine laterale Bewegung des Bandes unter bestimmten Bedingungen im Betrieb verhindern soll.

### Aufgabe

Es daher Aufgabe der Erfindung, eine Förderanlage mit einem Fördergurt zu schaffen, bei der die Gefahrenstelle zwischen Förderrolle und benachbarten feststehenden Teilen durch Abdeckung der Gefahrenstelle durch den Gurt entschärft ist, sowie eine Konstruktionsform für die Lagerung einer Förderrolle in einer solchen Förderanlage zu schaffen, welche kostengünstig herzustellen ist und einen geringen Wartungsbedarf aufweist.

### Lösung der Aufgabe

Die Aufgabe wird durch die Vorrichtung gemäß dem nebengeordneten Anspruch gelöst. Vorteilhafte Ausführungsformen sind in den Unteransprüchen offenbart.

Ein Aspekt der Erfindung betrifft eine Förderanlage, die als Gurtförderanlage ausgebildet ist und einen Fördergurt aufweist, welcher die Förderrolle zumindest teilweise umschlingt, wobei die Förderrolle auf zumindest einer Seite über einen Lagertopf gelagert ist, der einen Radius aufweist, der zumindest über einen Umschlingungsbereich des Fördergurtes im Wesentlichen gleich ausgebildet ist als der Radius der Förderrolle im axialen Endbereich der Förderrolle, wobei der Fördergurt breiter ist als die Länge der Förderrolle in axialer Richtung und wobei der Fördergurt auf der Förderrolle derart angeordnet ist, dass der Spalt zwischen Förderrolle und Lagertopf von dem Fördergurt abgedeckt wird, wobei die Förderrolle ballig ausgeführt ist.

Der Umschlingungsbereich ist abhängig von dem Grad der Umlenkung des Förderbandes an der Förderrolle. Wird die Förderrolle als Umlenkrolle am Ende eines Förderbandes verwendet, kann der Umschlingungsbereich 180° oder mehr betragen. Im Fall einer Förderrohr, welche zwischen den Enden eines Förderbandes eingesetzt wird, kann der Umschlingungsbereich nur in einem Umfangspunkt im Querschnitt bzw. linienförmig in Längsrichtung der Transportrolle verlaufend gegeben sein. Über den Lagertopf wird die Förderrolle in einem Rahmen der Förderanlage befestigt. Dabei wird der Spalt, der bei herkömmlicher Lagerung zwischen dem Rahmen und der Förderrolle bestehen würde, in Richtung der Rollenmitte der Förderrolle verlagert. Dabei hat sich überraschend herausgestellt, dass je nach Gestaltung des Lagertopfes, beziehungsweise der Förderrolle, die Relativbewegung zwischen dem Fördergurt, welcher über die Oberfläche des Fördertopfes gleitend abgetragen wird, nicht zu einer ungewünschten Abnutzung des Fördergurtes führt. Dies lässt sich dadurch erklären, dass insbesondere bei einem größeren Durchmesser der Förderrolle im Rollenendbereich der Förderrolle gegenüber dem Durchmesser des Lagertopfes die Gurtspannung im Bereich des Lagertopfes vernachlässigt werden kann. Dieser Effekt ist ebenfalls zu beobachten, wenn der Radius des Lagertopfes im Umschlingungsbereich dem Radius der Förderrolle im Rollenendbereich im Wesentlichen gleich ist, wenn die Förderrolle ballig ausgeführt ist, also einen größeren Durchmesser im Rollenmittelbereich aufweist als im Rollenendbereich. Unabhängig von der Gestaltung der Radien beziehungsweise Durchmesser von Lagertopf und Förderrolle können Abnutzungserscheinungen auch durch eine besonders glatte Oberflächengestaltung des Lagertopfes und/oder eine entsprechende Wahl der Materialien von Lagertopf und Fördergurt verringert oder sogar verhindert werden. Bevorzugt wird der Lagertopf aus Stahl hergestellt. Dabei ist die Förderrolle bevorzugt auf beiden Seiten über je einen Lagertopf gelagert.

Eine weitere vorteilhafte Ausführungsform bezieht sich auf eine Förderanlage, bei der der Lagertopf im Umschlingungsbereich eine Rauhtiefe von z.B. Ra 3,2 oder Ra 6,3 aufweist, wobei die Rauhtiefe Ra 6,3 besonders bevorzugt ist.

Vorzugsweise weist eine solche Förderanlage eine Gestaltung auf, bei der der Rollenmitteldurchmesser im Rollenmittelbereich der Förderrolle zwischen 1 mm und 2 mm, bevorzugter etwa 1,5 mm größer ist als der Rollenenddurchmesser der Förderrolle in einem Rollenendbereich. Mit dem Begriff Rollenendbereich wird der Bereich eines der axialen Enden der Förderrolle bezeichnet. Der Begriff ballig, wie er vorliegend verwendet wird, umfaßt sowohl eine abgerundete konvexe Gestaltung der Oberfläche als auch eine bevorzugte Gestaltung, bei der die Transportrolle zwei im Wesentlichen konische Bereiche aufweist, die sich an den Rollenendbereichen beginnend zur Mitte der Transportrolle hin aufweiten und im Mittelbereich der Rolle durch einen im Wesentlich kreiszylindrischen Bereich miteinander verbunden werden, wobei bevorzugt die axiale Länge jedes der drei Bereiche im Wesentlichen einem Drittel der Rollenlänge entspricht.

Bevorzugt ist ferner eine solche Förderanlage, bei der zumindest ein Lager, über welches die Förderrolle drehbar gelagert ist, in dem Lagertopf aufgenommen ist. Ein solches Lager kann ein Gleitlager sein. Bevorzugt ist das Lager als Wälzlager und noch bevorzugter als Pendelkugellager ausgeführt. Dabei ist die Förderrolle bevorzugt auf beiden Seiten über je ein Pendelkugellager in je einem Lagertopf gelagert.

Eine weitere vorteilhafte Ausführungsform betrifft eine solche Förderanlage, bei der die Förderrolle über einen Achsbolzen drehbar gelagert ist, der an der Förderrolle dreh- und axialfest angeordnet ist und einen Lagerbereich aufweist, der in axialer Richtung über den Rollenendbereich der Förderrolle übersteht und in diesem Bereich einen mit einem Lagerinnenring des Wälzlagers korrespondierenden Lagerdurchmesser aufweist.

Weiterhin bevorzugt ist eine Gestaltung einer Förderanlage, bei welcher der Achsbolzen in der Förderrolle über eine Welle-Nabe-Baugruppe befestigt ist, die ferner ein elastisch verformbares Spreizelement und eine Nabe aufweist, wobei der Achsbolzen einen Achsbereich mit einem Achsquerschnitt aufweist, der im Wesentlichen einem Nabenquerschnitt eines korrespondierenden Nabenbereichs der Nabe entspricht, derart, dass der in der Nabe angeordnete Achsbolzen relativ zur Nabe in radialer Richtung fixiert ist, wobei der Achsbolzen einen Achsdrehschlussbereich aufweist und die Nabe einen Nabendrehschlussbereich aufweist, wobei Achsdrehschlussbereich und Nabendrehschlussbereich derart gestaltet sind, dass der in der Nabe angeordnete Achsbolzen relativ zu der Nabe gegen Verdrehung in Umfangsrichtung fixiert ist, und wobei das Spreizelement an dem Achsbolzen angeordnet ist, einen Außenumfangsbereich aufweist und derart gestaltet ist, dass der Außenumfangsbereich im entspannten Zustand des Spreizelements einen Außendurchmesser aufweist, der größer ist als ein Innendurchmesser eines korrespondierenden Innenumfangsbereichs der Nabe, wobei das Spreizelement, wenn der Achsbolzen in der Nabe angeordnet ist, derart elastisch verformt ist, dass der Außenumfangsbereich des Spreizelements von der entspannten Position des Spreizelements in axialer Richtung des Achsbolzens verlagert ist und wobei mit der axialen Verlagerung des Außenumfangsbereichs des Spreizelements eine Verkleinerung des Außendurchmessers des Außenumfangsbereichs des Spreizelements derart gekoppelt ist, dass der verkleinerte Außendurchmesser des Spreizelements dem Innendurchmesser des korrespondierenden Innenumfangsbereichs der Nabe entspricht und an diesem vorgespannt anliegt.

Dabei weisen Achsbereich und Nabenbereich bevorzugt eine im Wesentlichen allgemeinzylindrische Gestaltung auf, das heißt die korrespondierenden Oberflächen können im Wesentlichen als Oberflächen beschrieben werden, die jeweils durch die Parallelverschiebung einer Geraden, die parallel zur Achse des Achsbolzens verläuft, entlang einer geschlossenen beliebigen Kurve im Raum erzeugt wird. Dadurch wird gewährleistet, dass Achsbereich und Nabenbereich bei der Montage einfach ineinander geschoben werden können. Besonders einfach herzustellen sind die beiden Bereiche, wenn sie einen im Wesentlichen kreiszylindrischen Querschnitt haben. Querschnittsformen, die von der kreiszylindrischen Form abweichen, weisen dagegen den Vorteil auf, dass diese gleichzeitig die Funktion des Achsdrehschlussbereichs beziehungsweise Nabendrehschlussbereichs verwirklichen, ohne Nabe und Achsbolzen miteinander verpressen oder zusätzliche Bauelemente vorsehen zu müssen. Die axiale Verlagerung des Außenumfangsbereichs, die mit einer Verkleinerung des Außendurchmessers gekoppelt ist, beschreibt eine kombinierte Bewegung des Außendurchmessers, welche eine axiale Komponente und eine radiale Komponente aufweist. Dabei erfolgt die Verlagerung in axialer Richtung entgegen der Einführrichtung des Achsbolzens in die Nabe. Durch eine solche Bewegung, die schräg zur Achse des Achsbolzens verläuft, wird eine Fixierung des Achsbolzens in der Nabe bewirkt. Die Begriffe Welle, Nabe und Achsbolzen bezeichnen in der hier verwendeten Form Bauteile, die Drehmomente übertragen, genauso wie Bauteile, die kein Drehmoment übertragen.

Ferner weist eine solche Förderanlage bevorzugt eine Gestaltung auf, bei der das Spreizelement und der korrespondierende Innenumfangsbereich der Nabe derart gestaltet sind, dass aufgrund des Reibbeiwerts zwischen Spreizelement und Innenumfangsbereich und durch einen Anstellwinkel zwischen den verlagerten Bereichen des Spreizelements, an deren radialen Enden der Außenumfangsbereich des Spreizelements angeordnet ist, und dem Innenumfangsbereich des Spreizelement eine Selbsthemmung des Spreizelements in der Nabe erzeugt wird. Die verlagerten Bereiche des Spreizelements können z.B. bevorzugt als fingerartige Fortsätze ausgebildet sein, wobei deren Enden den Außenumfangsbereich darstellen und wobei die Seiten der fingerartigen Fortsätze, die dem Außenumfangsbereich gegenüberliegen, an einer Spreizelementbasis angebracht sind. Ein derartiger fingerartiger Fortsatz wird im Rahmen der elastischen Verformung im wesentlichen im Bereich des Anbringungspunktes an der Spreizelementbasis verformt, so dass der restliche Teil des fingerartigen Fortsatzes im Wesentlichen unverformt als verlagerter Bereich des Spreizelements um den Anstellwinkel verschwenkt wird. Dabei vollzieht der Bereich des fingerartigen Fortsatzes, der als Außenumfangsbereich bezeichnet wird, die beschriebene, kombinierte Bewegung in axialer und radialer Richtung. Der Begriff Selbsthemmung bedeutet, dass beim Aufbringen einer Kraft auf den Achsbolzen in axialer Richtung entgegen einer Einführrichtung des Achsbolzens eine aus dieser Kraft resultierende Normalkraft zwischen dem Außenumfangsbereich des Spreizelementes und dem Innenumfangsbereich der Nabe erzeugt wird, die unter Berücksichtigung des Reibbeiwerts zwischen dem Außenumfangsbereich des Spreizelementes und dem Innenumfangsbereich der Nabe in einer Reibkraft resultiert, welche größer ist als die Kraft auf den Achsbolzen in axialer Richtung entgegen der Einführrichtung des Achsbolzens (unter Vernachlässigung der Reibungskraft, welche durch die Federkraft des Spreizelementes erzeugt wird). Durch diese Gestaltung kann der Achsbolzen mit dem Spreizelement in die Nabe geschoben werden und ist in der eingeschobenen Position in der Nabe in eine Richtung entgegen der Einführrichtung arretiert. Alternativ oder zusätzlich kann die Arretierung dadurch bewirkt werden, dass die Materialpaarung zwischen Material des Spreizelements und Material der Nabe derart gewählt ist, dass der Außenumfangsbereich des Spreizelements beim Einspreizen in die Oberfläche des Innenumfangsbereichs der Nabe eindringen kann, so dass der Selbsthemmungseffekt durch einen Formschluss ersetzt oder verstärkt wird. Dabei ist der Außenumfangsbereich des Spreizelements bevorzugt derartig scharfkantig ausgeführt, dass ein Eindringen in die Oberfläche des Innenumfangsbereichs der Nabe erleichtert wird.

Bevorzugt ist ferner eine solche Ausführungsform der Förderanlage, bei der das Spreizelement als Scheibe oder als bevorzugt geschlossener Ring ausgestaltet ist, wobei das Spreizelement umfänglich voneinander beabstandete Schlitze aufweist, welche sich vom Außenumfangsbereich ausgehend im Wesentlichen radial derart nach innen erstrecken, dass der Außenumfangsbereich durch die Enden einer Anzahl fingerartiger Fortsätze gebildet wird, die in Umfangsrichtung durch Schlitze voneinander getrennt sind. Dabei kann das bevorzugt als geschlossener Ring ausgestaltete Spreizelement z.B. die Grundform einer Beilagscheibe aufweisen, welche von außen nach innen gerichtete Schlitze aufweist. Eine solche geschlitzte Beilagscheibe weist im entspannten Zustand im Wesentlichen eine ebene Form auf. Denkbar ist ebenfalls, dass das Spreizelement bereits im entspannten Zustand eine tellerartige Grundform hat, bei der der Tellerrand eine im Wesentlichen konische Form aufweist. Eine derartige Gestaltung erleichtert das Einschieben des Achsbolzens mit dem Spreizelement in die Nabe. Die Schlitze verlaufen in beiden Fällen bevorzugt im Wesentlichen radial von außen nach innen oder weisen eine im Wesentlichen V-förmige Form auf. Denkbar sind auch andere Formen der Schlitze, wie z.B. spiralförmig nach innen verlaufende Ausnehmungen.

Eine weitere vorteilhafte Ausführungsform bezieht sich auf eine solche Förderanlage, bei der das Spreizelement an dem Achsbolzen bevorzugt an einem axialen Ende des Achsbolzens angeordnet ist und/oder durch Annieten, Anschweißen, Anschrauben oder eine sonstige Befestigungsart an dem Achsbolzen befestigt ist. Ein radiales Spiel bewirkt vorteilhaft, dass sich das Spreizelement, unabhängig von einer präzisen rotationssymmetrischen Anordnung im Verhältnis zur Achse des Achsbolzens, beim Einsetzen in die Nabe gleichmäßig einspreizen kann. Auf diese Weise wird eine Doppelpassung vermieden.

Bevorzugt ist ferner eine Ausführungsform der Förderanlage, bei welcher der Achsbolzenbereich des Achsbolzens, der in der Nabe aufgenommen wird, im Wesentlichen kreiszylindrisch ausgebildet ist und wobei der Durchmesser des Achsbolzenbereichs und ein Durchmesser eines korrespondierenden Nabenaufnahmebereichs der Nabe eine Schiebepassung, eine leichte Presspassung oder eine Presspassung bilden, welche z.B. die Passungen H7-g8 oder H7-p8 umfassen. Die kreiszylindrische Gestaltung ist besonders einfach und daher günstig herzustellen. Eine Schiebepassung ist dabei insbesondere leicht zu montierten. Aufgrund des Spreizelementes ist eine Übermaßpassung zur Fixierung des Achsbolzens in der Nabe nicht erforderlich. Eine leichte Presspassung kann aber vorteilhaft sein, wenn keine oder nur geringe Drehmomente übertragen werden sollen, da durch eine leichte Presspassung in diesem Fall ein in der Herstellung aufwändiger Formschluss vermieden werden kann.

Eine weitere vorteilhafte Ausführungsform bezieht sich auf eine Förderanlage, bei welcher der Durchmesser der Nabe im Wesentlichen über die gesamte Einschublänge des Achsbolzens denselben Durchmesser aufweist. Bei dieser Gestaltung sind Achsbereich beziehungsweise Nabenbereich zumindest teilweise identisch mit dem Achsdrehschlussbereich und dem Nabendrehschlussbereich. Dabei wird ein Drehschluss bevorzugt über eine Presspassung erzielt.

Vorzugsweise weist eine solche Förderanlage eine Gestaltung auf, bei der der Drehschlussbereich zwischen Achsbolzen und Nabe als Formschlussbereich gestaltet ist. Bevorzugt wird ein solcher Formschlussbereich durch eine Passfeder erzielt, die als gesondertes Element in einer Nut des Achsbolzens sowie in einer Nut der Nabe angeordnet ist. Denkbar sind auch andere Gestaltungsformen eines Formschlusses, z.B. eine nicht rotationssymmetrische Ausgestaltung der korrespondierenden Querschnitte von Achsbolzen und Nabe z.B. in Form eines Keilwellenprofils.

Bevorzugt ist ferner eine solche Förderanlage, bei der das Spreizelement aus Stahl hergestellt ist. Bevorzugt ist das Spreizelement aus gehärtetem Federstahl hergestellt. Aufgrund der Härte von Federstahl kann sich das Spreizelement in weicheren Materialien der Nabe einfach einspreizen. Dabei kann die Nabe z.B. aus nicht gehärtetem Stahl, Aluminium oder Kunststoff bestehen, beziehungsweise solche Materialien aufweisen. Bei weicheren Materialien wie z.B. Kunststoff oder Aluminium kann es ausreichend sein, wenn das Spreizelement aus nicht gehärtetem Stahl oder einem anderen Metall hergestellt ist, da auch diese Materialien des Spreizelementes im Verhältnis zum jeweiligen Nabenmaterial eine ausreichende Elastizität und Härte aufweisen können. Denkbar sind ebenfalls andere Materialien, welche eine ausreichende Elastizität und Härte aufweisen.

Eine weitere vorteilhafte Ausführungsform betrifft eine solche Förderanlage, bei der die Nabe aus einer Aluminiumlegierung hergestellt ist. Aluminium beziehungsweise eine Aluminiumlegierung weist den Vorteil auf, dass dieses Material einfach, z.B. im Stranggussverfahren, hergestellt beziehungsweise extrudiert werden kann. Dabei ist es möglich, die Nabe zusammen mit einem Trommelmantel und eventuell dazwischen erforderlichen Verstrebungen in einem Arbeitsgang herzustellen.

Im Folgenden werden einzelne besonders bevorzugte Ausführungsformen der Erfindung beispielhaft beschrieben. Dabei weisen die einzelnen beschriebenen Ausführungsformen zum Teil Merkmale auf, die nicht zwingend erforderlich sind, um die vorliegende Erfindung auszuführen, die aber im Allgemeinen als bevorzugt angesehen werden. So sollen auch Ausführungsformen als unter die Lehre der Erfindung fallend offenbart angesehen werden, die nicht alle Merkmale der im Folgenden beschriebenen Ausführungsformen aufweisen. Genauso ist es denkbar, Merkmale, die in Bezug auf unterschiedliche Ausführungsformen beschrieben werden, selektiv miteinander zu kombinieren.

### Kurze Beschreibung der Zeichnungen

- Figur 1: zeigt eine isometrische Ansicht einer Förderanlage im Teilschnitt.
- Figur 2: zeigt die Förderanlage aus Figur 1 in einer stirnseitigen Sicht im Teilschnitt.
- Figur 3: zeigt eine vergrößerte Ansicht der Förderanlage aus Figur 2.
- Figur 4: zeigt eine Baugruppe der Förderanlage mit zwei Lagertöpfen und einer Förderrolle mit freigeschnittenen Bereichen und einer Querschnittsansicht durch die Förderrolle.
- Figur 5: zeigt eine isometrische Ansicht eines Achsbolzens mit einem daran angeordneten Spreizelement.
- Figur 6a: zeigt eine isometrische Schnittansicht des Spreizelementes.
- Figur 6b: zeigt Detail A aus Figur 6a.

### Detaillierte Beschreibung der Zeichnung

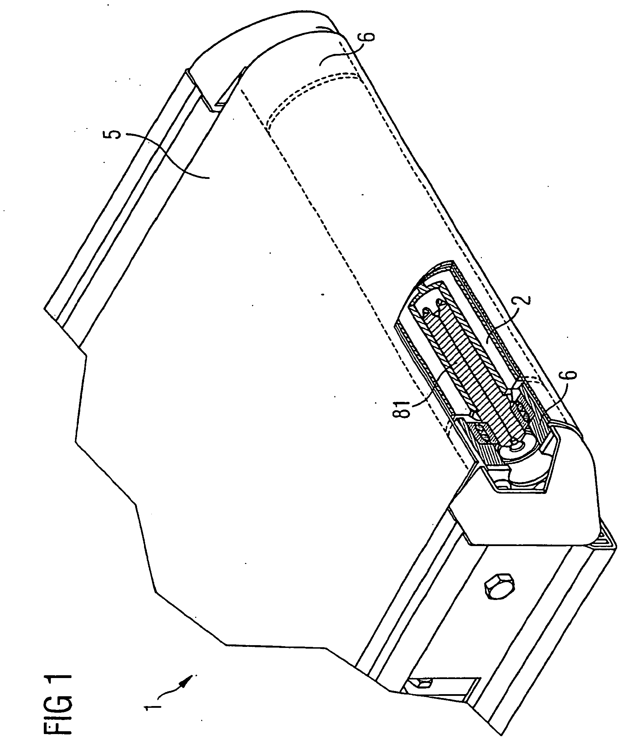

**Figur 1** zeigt eine isometrische Ansicht einer Förderanlage 1 im Teilschnitt.

Die Förderanlage 1 ist als Gurtförderer ausgebildet. Figur 1 zeigt den Umlenkbereich eines Fördergurtes 5, der über eine Förderrolle 2 um 180° umgelenkt wird. Demnach steht der Fördergurt 5 über einen Umschlingungswinkel von circa 180° mit der Förderrolle 2 in Kontakt.

Die Förderrolle 2 ist zwischen zwei Lagertöpfen 6 drehbar gelagert. Die Lagertöpfe 6 sind drehfest an einem Rahmen befestigt. Im Betrieb dreht sich daher die Förderrolle 2 relativ zu den Lagertöpfen 6 beziehungsweise zu dem Rahmen der Förderanlage 1.

Zur Lagerung der Förderrolle 2 ist in den feststehenden Lagertöpfen 6 jeweils ein Lager 61 vorgesehen, das in der vorliegenden bevorzugten Ausführungsform als Wälzlager, insbesondere als Pendelkugellager, ausgeführt ist. Dabei wird die Förderrolle 2 über jeweils einen Achsbolzen 81 in den Lagern 61 gelagert.

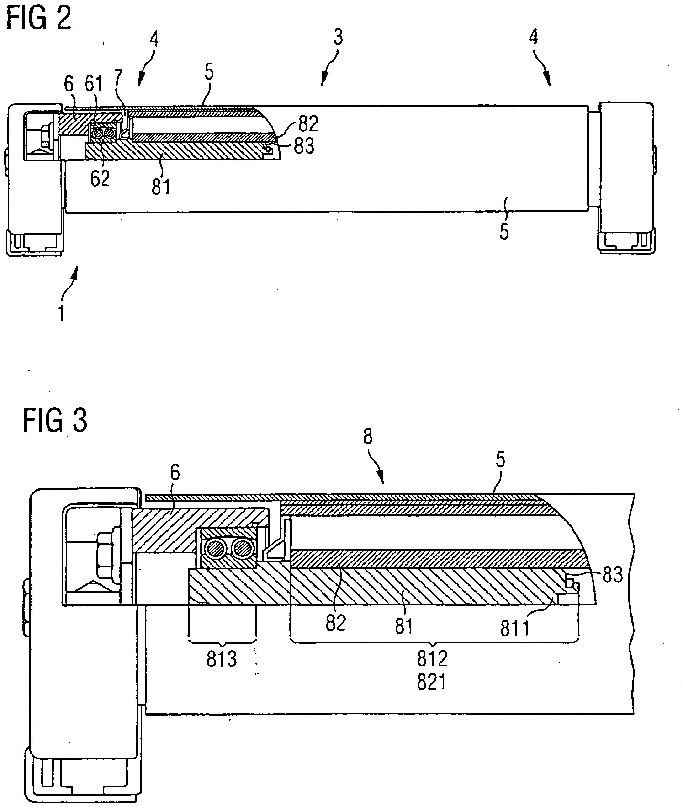

**Figur 2** zeigt die Förderanlage 1 aus Figur 1 in einer stirnseitigen Sicht im Teilschnitt, und **Figur 3** zeigt eine vergrößerte Ansicht der Förderanlage 1 aus Figur 2. Die Figuren zeigen jeweils dieselbe Ausführungsform der bevorzugten Förderanlage 1. Daher werden für die gleichen Teile jeweils die gleichen Bezugszeichen verwendet.

In Figur 3 ist der Achsbolzen 81 in einem Teilschnitt der Förderanlage 1 dargestellt. Dabei ist ersichtlich, dass der Achsbolzen 81 einen Achsbolzenbereich 812 aufweist, der in einem Nabenaufnahmebereich 821 einer Nabe 82 aufgenommen ist. In der dargestellten bevorzugten Ausführungsform ist der Achsbolzenbereich 812 als im Wesentlichen kreiszylindrischer Körper ausgebildet und in den ebenfalls als kreiszylindrisches Loch ausgebildeten Nabenaufnahmebereich 821 der Nabe 82 eingeschoben. Dabei sind die Toleranzen des Nabenaufnahmebereichs 821 und des Achsbolzenbereichs 812 als leichte Presspassung bemessen. Um einen sicheren Sitz des Achsbolzens 81 in der Nabe 82 zu gewährleisten, ist in einem axialen Ende 811 des Achsbolzens 81 ein Spreizelement 83 vorgesehen, welches bevorzugt eine unlösbare Verbindung zwischen Achsbolzen 81 und Förderrolle 2 gewährleistet.

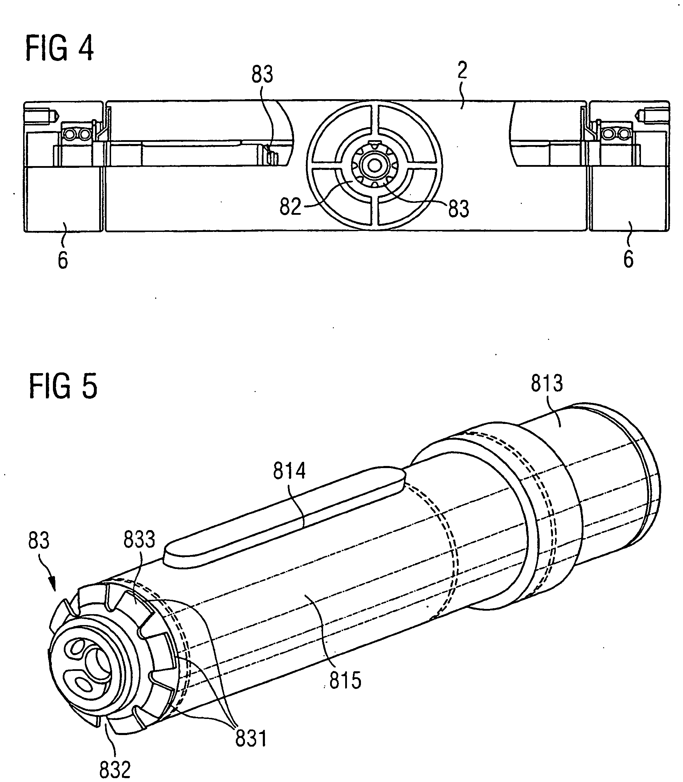

Der Querschnitt der bevorzugten Förderrolle 2 ist in Figur 4 dargestellt.

**Figur 4** zeigt eine Baugruppe der Förderanlage 1 mit zwei Lagertöpfen 6 und einer Förderrolle 2 mit freigeschnittenen Bereichen und einer Querschnittsansicht durch die Förderrolle 2.

Dabei ist in Figur 4 gezeigt, dass die Nabe 82, ein Förderrollenmantel der Förderrolle 2 und Verbindungsstege zwischen der Nabe 82 und dem Förderrollenmantel einteilig hergestellt sind. Die Herstellung einer solchen Förderrolle 2 kann z.B. im Stranggussverfahren erfolgen. Ein bevorzugtes Material für die Förderrolle 2 ist Aluminium oder eine Aluminiumlegierung. Denkbar ist ebenfalls, die Förderrolle 2 in einer beliebigen anderen Form herzustellen, z.B. aus mehreren Teilen zusammenzusetzen. Eine im Stranggussverfahren hergestellte Förderrolle 2 weist über die gesamte Länge der Förderrolle 2 im Wesentlichen den gleichen Querschnitt auf. Eine Balligkeit der Förderrolle 2, die eine bevorzugte Form der Förderrolle 2 darstellt, wird bevorzugt in einem Bearbeitungsschritt durch Überdrehen der Mantelfläche der Förderrolle 2 erzeugt.

Die Balligkeit der Förderrolle 2 bewirkt vorteilhaft, dass ein Fördergurt, welcher über die Förderrolle 2 umgelenkt oder gestützt wird, zentriert wird und nicht in axialer Richtung von der Förderrolle abwandert. In der bevorzugten Ausführungsform mit den zwei Lagertöpfen 6, über welche die Förderrolle 2 drehbar gelagert ist, weist die Balligkeit der Förderrolle 2 ferner den Vorteil auf, dass die Randbereiche des Fördergurtes 5 im Wesentlichen spannungsfrei bleiben.

Wie in Figur 3 ersichtlich ist, weist der Lagertopf 6 einen etwas kleineren Durchmesser als der benachbarte Rollenendbereich 4 der Förderrolle 2 auf. Diese Gestaltung trägt zusätzlich zu der Balligkeit der Förderrolle 2 zu einer Reduzierung der Reibung zwischen Fördergurt 5 und Lagertopf 6 bei.

In einer besonders bevorzugten Ausführungsform ist der Lagertopf 6 zumindest in dem Umschlingungsbereich des Fördergurtes 5 mit einer glatten Oberfläche versehen, so dass eine unerwünschte Reibung weiter reduziert werden kann. Eine bevorzugte Rauhtiefe, mit der der Lagertopf 6 zumindest in diesem Bereich versehen ist, liegt bei Ra 6,3.

Wie ebenfalls in Figur 3 ersichtlich ist, ist der Achsbolzen 81 auf der dem Spreizelement 83 gegenüberliegenden Seite mit einem Lagerbereich 813 versehen, der ebenfalls bevorzugt kreiszylindrisch ausgebildet ist und einen Durchmesser aufweist, der mit dem Lagerinnenring 62 des Lagers 61 eine gewünschte Passung bildet. Dabei ist bevorzugt der Lagerbereich 813 auf einer Seite der förderrolle 2 als Festlager und auf der anderen Seite der Förderrolle 2 als Loslager ausgebildet.

Figur 5 zeigt eine isometrische Ansicht des Achsbolzens 81 mit einem daran angeordneten Spreizelement 83.

In dieser Figur ist gut ersichtlich, dass an dem Achsbolzen 81 ein Achsdrehschlussbereich 814 vorgesehen ist, der in der dargestellten bevorzugten Ausführungsform über eine Nut in dem Achsbolzen 81 ausgebildet ist, in den eine Passfeder eingesetzt ist. In der dargestellten Ausführungsform ist ferner ersichtlich, dass zwischen Lagerbereich 813 und Achsbereich 815 ein Bund mit einem größeren Durchmesser vorgesehen ist, der als Anschlag in beide Richtungen dient.

Ebenfalls ist denkbar, anstelle einer Passfeder eine Presspassung zwischen Achsbolzen 81 und Nabe 82 vorzusehen. Denkbar sind auch andere Ausführungen, über die ein Drehschluss zwischen Nabe 82 und Achsbolzen 81 gewährleistet wird. Insbesondere bei nicht angetriebenen Förderrollen 2 oder bei Förderrollen, die nur ein geringes Drehmoment übertragen müssen, genügt eine leichte Presspassung, die auch zwischen dem Achsbolzen 81 und der bevorzugt aus einer Aluminiumlegierung hergestellten Nabe 82 erzeugt werden kann.

Das Spreizelement 83 ist an einem axialen Ende 811 des Achsbolzens 81 angeordnet. In der dargestellten bevorzugten Ausführungsform ist das Spreizelement 83 an dem Achsbolzen 81 angenietet. Denkbar ist ebenfalls, dass Spreizelement 83 auf andere Art und Weise an dem Achsbolzen zu befestigen, z.B. durch Schrauben, Schweißen etc.

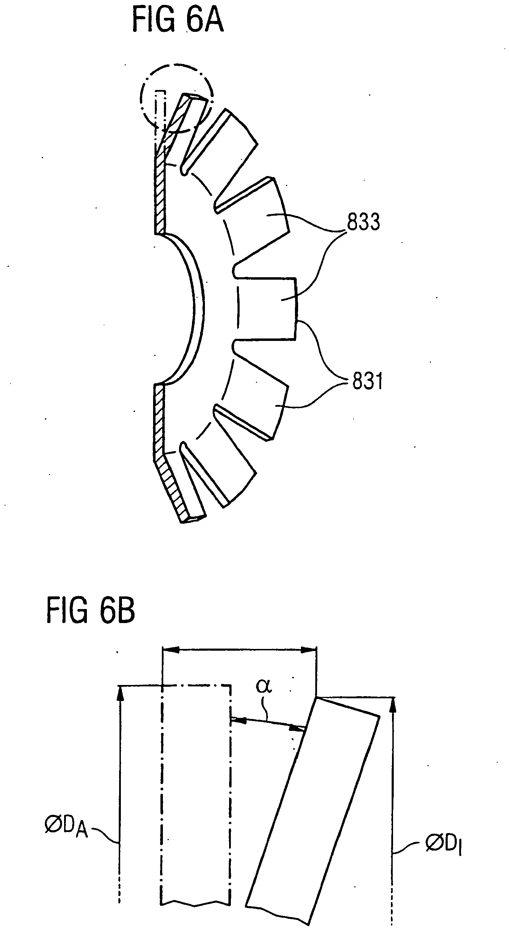

**Figur 6a** zeigt eine isometrische Schnittansicht eines bevorzugten Spreizelementes 83, dass auch in Figur 5 dargestellt ist.

Dabei ist in Figur 6a gezeigt, dass die Grundform des bevorzugten Spreizelementes 83 im Wesentlichen der Form eines Tellers entspricht, bei dem die Ränder des Tellers konisch ausgebildet sind. In der Mitte des Spreizelementes 83 ist bevorzugt ein Loch angeordnet, durch welches ein Niet oder eine Schraube zur Befestigung gesteckt werden können.

In der dargestellten bevorzugten Ausführungsform ist das Spreizelement 83 um das Loch als geschlossener Ring ausgeführt, von dem aus sich fingerartige Fortsätze 833 in radialer Richtung nach außen erstrecken. Anders formuliert, erstrecken sich Schlitze 832 von einem Außenumfangsbereich 831 des Spreizelementes 83 nach innen und trennen den Umfangsbereich in Teilabschnitte auf. Die Schlitze 832 können, wie in der dargestellten bevorzugten Ausführungsform gezeigt, eine V-förmige Gestalt besitzen und sich im Wesentlichen radial nach innen erstrecken. Denkbar sind ebenfalls andere Ausführungsformen, bei denen sich Schlitze alternativ oder zusätzlich von innen nach außen erstrecken, so dass der Ring im Wesentlichen zickzackförmig verläuft. Ebenfalls ist denkbar, den Ring, nicht als geschlossenen Ring sondern als an einer Stelle durchgehend geschlitzten Ring mit zwei offenen Enden auszuformen.

In der dargestellten bevorzugten Ausführungsform erstrecken sich die Schlitze 832 im Wesentlichen ausgehend vom Außenumfangsbereich 831 bis zu einem Knick, der zwischen dem Tellerrand und der ebenen Tellerfläche ausgebildet ist, nach innen. Denkbar ist ebenfalls, dass die Schlitze weiter zum Mittelpunkt des Spreizelements 83 führen oder kürzer ausgebildet sind.

**Figur 6b** zeigt ein Detail A aus Figur 6 a.

In dieser Figur ist mit gestrichelter Linie die Position des fingerartigen Fortsatzes 833 dargestellt, in der sich der Finger in einer ebenen Gestaltung des Spreizelements 83 im entspannten Zustand befinden würde (bei fingierter ebener Gestaltung). Aus dieser entspannten Position kann der fingerartige Fortsatz 833 um einen Winkel α in eine gespannte Position verlagert werden, die in Figur 6b als schraffierter Bereich dargestellt ist. Bei der bevorzugten Ausführungsform des tellerartigen Spreizelements 83 würde die entspannte Position zwischen den beiden dargestellten Positionen liegen. In beiden Fällen ist ersichtlich, dass das Spreizelement 83 in seiner gespannten Position einen Durchmesser D_{I} aufweist, der dem Durchmesser des Innenumfangsbereichs der Nabe 82 entspricht. Ein solcher Durchmesser DI kann z.B. im Bereich von 31,3 mm liegen. Ferner weist das Spreizelement 83 in seinem entspannten Zustand einen Durchmesser auf, der größer ist als der Durchmesser D_{I}. Ein solcher Durchmesser D_{A} kann z.B. im Bereich von 31,7 mm liegen.

Beim Einschieben des Achsbolzens 81 in die Nabe 82 werden die fingerartigen Fortsätze 833 verlagert und kommen vorgespannt am Innenumfangsbereich der Nabe 82 zum Anliegen. Durch die Reibung zwischen dem Außenumfangsbereich 831 des Spreizelements 83 und dem Innenumfangsbereich der Nabe 82 wird eine Reibungskraft erzeugt, die bewirkt, wenn der Achsbolzen 81 aus der Nabe 82 gezogen werden soll, dass die fingerartigen Fortsätze 833 in Richtung ihrer entspannten Position gedrückt werden. Einhergehend mit dieser Kraft wird auch der Anpressdruck zwischen dem Außenumfangsbereich 831 und den Innenumfangsbereich der Nabe 82 erhöht, da mit der Rückverlagerung in die entspannte Positionen eine Vergrößerung des Durchmessers einhergehen würde. Durch diese Gestaltung wird bewirkt, dass die Reibungskraft zwischen dem Außenumfangsbereich 831 und Innenumfangsbereich der Nabe 82 bevorzugt immer größer ist als die Kraft, welche auf den Achsbolzen 81 ausgeübt wird.

Dieser Effekt kann dadurch verstärkt werden, dass der Außenumfangsbereich 831 scharfkantig ausgebildet wird, so dass, insbesondere wenn das Material des Spreizelementes 83 härter ist als das Material der Nabe 82, der Außenumfangsbereich 831 in den Innenumfangsbereich der Nabe 82 eindringen kann. Durch diesen Effekt kann zusätzlich zu dem Reibschluss ein Formschluss auftreten, der eine besonders feste Verankerung des Achsbolzens 81 in der Nabe 82 erzeugt.

### Bezugszeichenliste

- 1: Förderanlage
- 2: Förderrolle
- 3: Rollenmittelbereich
- 4: Rollenendbereich
- 5: Fördergurt
- 6: Lagertopf
- 61: Lager
- 62: Lagerinnenring
- 7: Spalt
- 8: Welle-Nabe-Baugruppe
- 81: Achsbolzen
- 811: axiales Ende
- 812: Achsbolzenbereich (812) (der in der Nabe aufgenommen wird)
- 813: Lagerbereich
- 814: Achsdrehschlussbereich
- 815: Achsbereich
- 82: Nabe
- 821: Nabenaufnahmebereich
- 83: Spreizelement
- 831: Außenumfangsbereich
- 832: Schlitz
- 833: fingerartiger Fortsatz
- D_{A}: Außendurchmesser Spreizelement im entspannten Zustand
- D_{I}: Innendurchmesser Nabe im Bereich Spreizelement
- α: Anstellwinkel

## Patentansprüche

1. Förderanlage (1) die als Gurtförderanlage ausgebildet ist und einen Fördergurt (5) aufweist, welcher die Förderrolle (2) zumindest teilweise umschlingt, wobei die Förderrolle (2) auf zumindest einer Seite über einen Lagertopf (6) gelagert ist, , wobei der Fördergurt (5) breiter ist als die Länge der Förderrolle (2) in axialer Richtung und wobei der Fördergurt (5) auf der Förderrolle (2) derart angeordnet ist, dass der Spalt (7) zwischen Förderrolle (2) und Lagertopf (6) von dem Fördergurt (5) abgedeckt wird, **gekennzeichnet dadurch, dass** der Lagertopf (6) einen Radius aufweist, der zumindest über einen Umschlingungsbereich des Fördergurtes (5) im Wesentlichen gleich ausgebildet ist wie der Radius der Förderrolle (2) im axialen Endbereich der Förderrolle (2), und dadurch, dass die Förderrolle (2) ballig ausgeführt ist.

2. Förderanlage (1) nach Anspruch 1, wobei der Lagertopf (6) im Umschlingungsbereich eine Rauhtiefe von z.B. Ra 3,2 oder Ra 6,3 aufweist.

3. Förderanlage (1) nach einem der vorstehenden Ansprüche, wobei der Rollenmitteldurchmesser im Rollenmittelbereich (3) der Förderrolle (2) zwischen 1 mm und 2 mm, bevorzugter etwa 1,5 mm größer ist als der Rollenenddurchmesser der Förderrolle (2) in einem Rollenendbereich (4).

4. Förderanlage (1) nach einem der vorstehenden Ansprüche, wobei zumindest ein Lager (61) über welches die Förderrolle (2) drehbar gelagert ist in dem Lagertopf (6) aufgenommen ist.

5. Förderanlage (1) nach Anspruch 4, wobei die Förderrolle über einen Achsbolzen (81) drehbar gelagert ist, der an der Förderrolle (2) dreh- und axialfest angeordnet ist und einen Lagerbereich (813) aufweist, der in axialer Richtung über den Rollenendbereich (4) der Förderrolle (2) übersteht und in diesem Bereich einen mit einem Lagerinnenring (62) des Wälzlagers korrespondierenden Lagerdurchmesser
aufweist.

6. Förderanlage (1) nach Anspruch 5, wobei der Achsbolzen (81) in der Förderrolle über eine Welle-Nabe-Baugruppe (8) befestigt ist, die ferner ein elastisch verformbares Spreizelement (83) und eine Nabe (82) aufweist,
wobei der Achsbolzen (81) einen Achsbereich (815) mit einem Achsquerschnitt aufweist, der im Wesentlichen einem Nabenquerschnitt eines korrespondierenden Nabenbereichs der Nabe (82) entspricht, derart dass der in der Nabe (82) angeordnete Achsbolzen (81) relativ zur Nabe (82) in radialer Richtung fixiert ist,
wobei der Achsbolzen (81) einen Achsdrehschlussbereich (814) aufweist und die Nabe (82) einen Nabendrehschlussbereich aufweist, wobei Achsdrehschlussbereich (814) und Nabendrehschlussbereich derart gestaltet sind, dass der in der Nabe (82) angeordnete Achsbolzen (81) relativ zu der Nabe (82) gegen Verdrehung in Umfangsrichtung fixiert ist, und
wobei das Spreizelement (83) an dem Achsbolzen (81) angeordnet ist, einen Außenumfangsbereich (831) aufweist und derart gestaltet ist, dass der Außenumfangsbereich (831) im entspannten Zustand des Spreizelements (83) einen Außendurchmesser aufweist, der größer ist als ein Innendurchmesser eines korrespondierenden Innenumfangsbereichs der Nabe (82), wobei das Spreizelement (83), wenn der Achsbolzen (81) in der Nabe (82) angeordnet ist, derart elastisch verformt ist, dass der Außenumfangsbereich (831) des Spreizelements (83) von der entspannten Position des Spreizelements (83) in axialer Richtung des Achsbolzens (81) verlagert ist und wobei mit der axialen Verlagerung des Außenumfangsbereichs des Spreizelements (83) eine Verkleinerung des Außendurchmessers des Außenumfangsbereichs des Spreizelements (83) derart gekoppelt ist, dass der verkleinerte Außendurchmesser des Spreizelements (83) dem Innendurchmesser des korrespondierenden Innenumfangsbereichs der Nabe (82) entspricht und an diesem vorgespannt anliegt.

7. Förderanlage (1) nach Anspruch 6, wobei das Spreizelement (83) und der korrespondierende Innenumfangsbereich der Nabe (82) derart gestaltet sind, dass aufgrund des Reibbeiwerts zwischen Spreizelement (83) und Innenumfangsbereich und durch einen Anstellwinkel (α) zwischen den verlagerten Bereichen des Spreizelements (83), an deren radialen Enden der Außenumfangsbereich (831) des Spreizelements (83) angeordnet ist, und dem Innenumfangsbereich des Spreizelement (83) eine Selbsthemmung des Spreizelements (83) in der Nabe (82) erzeugt wird.

8. Förderanlage (1) nach einem der Ansprüche 6 bis 7, wobei das Spreizelement (83) als Scheibe oder als bevorzugt geschlossener Ring ausgestaltet ist, wobei das Spreizelement (83) umfänglich voneinander beabstandete Schlitze (832) aufweist, welche sich vom Außenumfangsbereich (831) ausgehend im Wesentlichen radial derart nach innen erstrecken, dass der Außenumfangsbereich (831) durch die Enden einer Anzahl fingerartiger Fortsätze (833) gebildet wird, die in Umfangsrichtung durch Schlitze (832) voneinander getrennt sind.

9. Förderanlage (1) nach einem der Ansprüche 6 bis 8, wobei das Spreizelement (83) an dem Achsbolzen (81) bevorzugt an einem axialen Ende (811) des Achsbolzens (81) angeordnet ist und/oder durch Annieten, Anschweißen, Anschrauben oder eine sonstige Befestigungsart an dem Achsbolzen (81) befestigt ist.

10. Förderanlage (1) nach einem der Ansprüche 6 bis 9, wobei der Achsbolzenbereich (812) des Achsbolzens (81), der in der Nabe (82) aufgenommen wird im Wesentlichen kreiszylindrisch ausgebildet ist und wobei der Durchmesser des Achsbolzenbereichs (812) und ein Durchmesser eines korrespondierenden Nabenaufnahmebereichs der Nabe (82) eine Schiebepassung, eine leichte Presspassung oder eine Presspassung bilden, welche z. B. die Passungen H7-g8 oder H7-p8 umfassen.

11. Förderanlage (1) nach einem der Ansprüche 6 bis 10, wobei der Durchmesser der Nabe (82) im Wesentlichen über die gesamte Einschublänge des Achsbolzens (81) denselben Durchmesser aufweist.

12. Förderanlage (1) nach einem der Ansprüche 6 bis 11, wobei der Drehschlussbereich zwischen Achsbolzen (81) und Nabe (82) als Formschlussbereich gestaltet ist.

13. Förderanlage (1) nach einem der Ansprüche 6 bis 12, wobei das Spreizelement (83) aus Stahl hergestellt ist. (bevorzugt gehärteter Federstahl)

14. Förderanlage (1) nach einem der Ansprüche 6 bis 13, wobei die Nabe (82) aus einer Aluminiumlegierung hergestellt ist.

## Claims

1. A conveyor system (1) configured as a belt conveyor system, and comprising a conveyor belt (5) which is at least partially wrapped around the conveyor roller (2), wherein the conveyor roller (2) at least on one side is supported via a bearing cup (6), wherein the conveyor belt (5) is wider than the length of the conveyor roller (2) in the axial direction, and wherein the conveyor belt (5) is arranged on the conveyor roller (2) in such a manner that the gap (7) between the conveyor roller (2) and the bearing cup (6) is covered by the conveyor belt (5), **characterized in that** the bearing cup (6) has a radius which, at least in an angle of wrap of the conveyor belt (5), is essentially equal to or slightly smaller than the radius of the conveyor roller (2) in the axial end region of the conveyor roller (2), and **in that** the conveyor roller (2) is designed in a crowned fashion.

2. The conveyor system (1) according to claim 1, wherein the bearing cup (6), in the angle of wrap, has a roughness depth of, for example, Ra 3.2 or Ra 6.3.

3. The conveyor system (1) according to one the preceding claims, wherein the roller center diameter in the roller central region (3) of the conveyor roller (2) is between 1 mm and 2 mm, more preferably about 1.5 mm, larger than the roller end diameter of the conveyor roller (2) in a roller end region (4).

4. The conveyor system (1) according to one of the preceding claims, wherein at least one bearing (61), via which the conveyor roller (2) is rotatably supported, is received in the bearing cup (6).

5. The conveyor system (1) according to claim 4, wherein the conveyor roller is rotatably supported via an axle pin (81) that is arranged on the conveyor roller (2) in a manner resistant against rotation and axial displacement and has a bearing region (813) projecting beyond the roller end region (4) of the conveyor roller (2) in the axial direction and has a bearing diameter corresponding to an inner bearing ring (62) of the antifriction bearing in this region.

6. The conveyor system (1) according to claim 5, wherein the axle pin (81) is fixed in the conveyor roller via a shaft-hub assembly (8), which further includes an elastically deformable expansion element (83) and a hub (82),
wherein the axle pin (81) has an axle region (815) with an axle cross-section essentially corresponding to a hub cross-section of a corresponding hub region of the hub (82) in such a manner that the axle pin (81) arranged in the hub (82) is fixed in the radial direction with respect to the hub (82),
wherein the axle pin (81) has an axle rotation locking region (814) and the hub (82) has a hub rotation locking region, wherein the axle rotation locking region (814) and the hub rotation locking region are configured in such a manner that the axle pin (81) arranged in the hub (82) is fixed against rotation in the circumferential direction with respect to the hub (82), and
wherein the expansion element (83) is arranged on the axle pin (81), has an outer peripheral region (831) and is configured in such a manner that the outer peripheral region (831) has an outer diameter in the relaxed state of the expansion element (83) that is larger than an inner diameter of a corresponding inner peripheral region of the hub (82), wherein the expansion element (83), when the axle pin (81) is arranged in the hub (82), is elastically deformed in such a way that the outer peripheral region (831) of the expansion element (83) is displaced from the relaxed position of the expansion element (83) in the axial direction of the axle pin (81), and wherein the axial displacement of the outer peripheral region of the expansion element (83) is coupled to a reduction of the outer diameter of the outer peripheral region of the expansion element (83) in such a manner that the reduced outer diameter of the expansion element (83) corresponds to the inner diameter of the corresponding inner peripheral region of the hub (82) and is in pre-stressed contact therewith.

7. The conveyor system (1) according to claim 6, wherein the expansion element (83) and the corresponding inner peripheral region of the hub (82) are formed in such a manner that due to the coefficient of friction between the expansion element (83) and the inner peripheral region and by means of a displacement angle (α) between the displaced regions of the expansion element (83), having the outer peripheral region (831) of the expansion element (83) arranged at their radial ends, and the inner peripheral region of the expansion element (83), a self-locking effect of the expansion element (83) is created in the hub (82).

8. The conveyor system (1) according to one of claims 6 to 7, wherein the expansion element (83) is configured as a disk or preferably as a closed ring, wherein the expansion element (83) has slots (832) spaced in the circumferential direction, which extend from the outer peripheral region (831) essentially radially in such a manner toward the inside, that the outer peripheral region (831) is formed by the ends of a number of finger-like extensions (833) mutually separated in the circumferential direction by slots (832).

9. The conveyor system (1) according to one of claims 6 to 8, wherein the expansion element (83) on the axle pin (81) is preferably arranged on an axial end (811) of the axle pin (81), and/or is attached on the axle pin (81) by riveting, welding, screwing or any other type of connection.

10. The conveyor system (1) according to one of claims 6 to 9, wherein the axle pin region (812) of the axle pin (81), which is received in the hub (82), has an essentially circular-cylindrically form, and wherein the diameter of the axle pin region (812) and a diameter of a corresponding hub receiving region of the hub (82) form a sliding fit, a slight press fit or a press fit, which comprise, for example, the H7-g8 or H7-p8 fits.

11. The conveyor system (1) according to one of claims 6 to 10, wherein the diameter of the hub (82) is essentially the same across the entire insertion length of the axle pin (81).

12. The conveyor system (1) according to one of claims 6 to 11, wherein the rotation locking region between the axle pin (81) and the hub (82) is formed as an interlocking engagement region.

13. The conveyor system (1) according to one of claims 6 to 12, wherein the expansion element is made of steel. (preferably hardened spring steel)

14. The conveyor system (1) according to one of claims 6 to 13, wherein the hub is made of an aluminum alloy.

## Revendications

1. Installation de transport (1) qui est réalisée en tant qu'installation de transport à courroie et présente une courroie de transport (5) qui enveloppe au moins partiellement le rouleau de transport (2), dans laquelle le rouleau de transport (2) est logé sur au moins un côté au-dessus d'un pot de roulement (6), dans laquelle la courroie de transport (5) est plus large que la longueur du rouleau de transport (2) dans la direction axiale et dans laquelle la courroie de transport (5) est disposée sur le rouleau de transport (2) de telle sorte que la fente (7) entre le rouleau de transport (2) et le pot de roulement (6) est recouvert par la courroie de transport (5), **caractérisée en ce que** le pot de roulement (6) présente un rayon qui est réalisé de manière essentiellement identique au moins sur une région d'enveloppe de la courroie de transport (5) au rayon du rouleau de transport (2) dans la région d'extrémité axiale du rouleau de transport (2), et **en ce que** le rouleau de transport (2) est réalisé de manière convexe.

2. Installation de transport (1) selon la revendication 1, dans laquelle le pot de roulement (6) présente dans la région d'enveloppe une profondeur de rugosité de, par exemple, Ra 3,2 ou Ra 6,3.

3. Installation de transport (1) selon l'une quelconque des revendications précédentes, dans laquelle le diamètre central de rouleau dans la région centrale de rouleau (3) du rouleau de transport (2) est supérieur d'une distance comprise entre 1 mm et 2 mm, de préférence à environ 1,5 mm au diamètre d'extrémité de rouleau du rouleau de transport (2) dans une région d'extrémité de rouleau (4).

4. Installation de transport (1) selon l'une quelconque des revendications précédentes, dans laquelle au moins un palier (61) par le biais duquel le rouleau de transport (2) est logé à rotation est reçu dans le pot de roulement (6).

5. Installation de transport (1) selon la revendication 4, dans laquelle le rouleau de transport est logé à rotation par le biais d'un boulon axial (81) qui est disposé de manière fixe en rotation et axialement sur le rouleau de transport (2) et présente une région de roulement (813) qui dépasse dans la direction axiale au-delà de la région d'extrémité de rouleau (4) du rouleau de transport (2) et présente dans cette région un diamètre de palier correspondant à un anneau interne de palier (62) du palier à roulement.

6. Installation de transport (1) selon la revendication 5, dans laquelle le boulon axial (81) est fixé dans le rouleau de transport par le biais d'un module à arbre et moyeu (8) qui présente en outre un élément d'écartement déformable élastiquement (83) et un moyeu (82),
dans laquelle le boulon axial (81) présente une région axiale (815) avec une section transversale axiale qui correspond essentiellement à une section transversale de moyeu d'une région de moyeu correspondante du moyeu (82) de telle sorte que le boulon axial (81) disposé dans le moyeu (82) est fixé dans la direction axiale par rapport au moyeu (82),
dans laquelle le boulon axial (81) présente une région de fin de rotation axiale (814) et le moyeu (82) présente une région de fin de rotation de moyeu, dans laquelle la région de fin de rotation axiale (814) et la région de fin de rotation de moyeu sont configurées de telle sorte que le boulon axial (81) disposé dans le moyeu (82) est fixé par rapport au moyeu (82) contre une rotation dans le sens périphérique, et
dans laquelle l'élément d'écartement (83) est disposé sur le boulon axial (81), présente une région périphérique externe (831) et est configuré de telle sorte que la région périphérique externe (831) présente à l'état détendu de l'élément d'écartement (83) un diamètre externe qui est supérieur à un diamètre interne d'une région périphérique interne correspondante du moyeu (82), dans laquelle, lorsque le boulon axial (81) est disposé dans le moyeu (82), l'élément d'écartement (83) est déformé élastiquement de telle sorte que la région périphérique externe (831) de l'élément d'écartement (83) est déplacée de la position détendue de l'élément d'écartement (83) dans la direction axiale du boulon axial (81) et dans laquelle, avec le déplacement axial de la région périphérique externe de l'élément d'écartement (83), une réduction du diamètre externe de la région périphérique externe de l'élément d'écartement (83) est couplée de telle sorte que le diamètre externe réduit de l'élément d'écartement (83) correspond au diamètre interne de la région périphérique interne correspondante du moyeu (82) et repose de manière précontrainte sur celui-ci.

7. Installation de transport (1) selon la revendication 6, dans laquelle l'élément d'écartement (83) et la région périphérique interne correspondante du moyeu (82) sont configurés de telle sorte qu'en raison du coefficient de friction entre élément d'écartement (83) et région périphérique interne et grâce à un angle d'incidence (α) entre les régions déplacées de l'élément d'écartement (83) aux extrémités radiales desquelles la région périphérique externe (831) de l'élément d'écartement (83) est disposée, et la région périphérique interne de l'élément d'écartement (83), un blocage automatique de l'élément d'écartement (83) est généré dans le moyeu (82).

8. Installation de transport (1) selon l'une quelconque des revendications 6 à 7, dans laquelle l'élément d'écartement (83) est réalisé en tant que disque ou en tant qu'anneau de préférence fermé, dans laquelle l'élément d'écartement (83) présente des fentes (832) écartées les unes des autres à la périphérie qui s'étendent en partant de la région périphérique externe (831) essentiellement radialement vers l'intérieur de telle sorte que la région périphérique externe (831) est formée par les extrémités d'un certain nombre de prolongements de type doigt (833) qui sont séparés les uns des autres dans le sens périphérique par des fentes (832).

9. Installation de transport (1) selon l'une quelconque des revendications 6 à 8, dans laquelle l'élément d'écartement (83) est disposé sur le boulon axial (81) de préférence à une extrémité axiale (811) du boulon axial (81) et/ou est fixé au boulon axial (81) par rivetage, soudage, vissage ou un autre type de fixation.

10. Installation de transport (1) selon l'une quelconque des revendications 6 à 9, dans laquelle la région de boulon axial (812) du boulon axial (81) qui est reçue dans le moyeu (82) est réalisée de manière essentiellement cylindrique circulaire et dans laquelle le diamètre de la région de boulon axial (812) et un diamètre d'une région de réception de moyeu correspondante du moyeu (82) forment un ajustement coulissant, un ajustement serré léger ou un ajustement serré qui comprennent par exemple les ajustements H7-g8 ou H7-p8.

11. Installation de transport (1) selon l'une quelconque des revendications 6 à 10, dans laquelle le diamètre du moyeu (82) présente le même diamètre essentiellement sur toute la longueur d'insertion du boulon axial (81).

12. Installation de transport (1) selon l'une quelconque des revendications 6 à 11, dans laquelle la région de fin de rotation entre boulon axial (81) et moyeu (82) est configurée en tant que région à fermeture géométrique.

13. Installation de transport (1) selon l'une quelconque des revendications 6 à 12, dans laquelle l'élément d'écartement (83) est fabriqué en acier (de préférence acier à ressorts trempé).

14. Installation de transport (1) selon l'une quelconque des revendications 6 à 13, dans laquelle le moyeu (82) est fabriqué en un alliage d'aluminium.
